# EUROPÄISCHE PATENTSCHRIFT

(11) **EP 1 046 088 B1**
(45) Veröffentlichungstag und Bekanntmachung des Hinweises auf die Patenterteilung: **13.06.2007**
(21) Anmeldenummer: 98966411.5
(22) Anmeldetag: 28.12.1998
(51) Int. Cl.: G05B 19/042

(54) **ELEKTRONISCHE, DIGITALE EINRICHTUNG**
ELECTRONIC DIGITAL DEVICE
DISPOSITIF NUMERIQUE ELECTRONIQUE

(30) Priorität: 07.01.1998 DE 19800311
(43) Veröffentlichungstag der Anmeldung: 25.10.2000
(73) Patentinhaber: Continental Teves AG & Co. oHG, 60488 Frankfurt (DE)
(72) Erfinder: ZYDEK, Michael, D-35428 Langgöns (DE); FEY, Wolfgang, D-65527 Niedernhausen (DE); TRASKOV, Adrian, D-61449 Steinbach (DE)
(74) Vertreter: Brand, Markus
(86) Internationale Anmeldenummer: PCT/EP1998/008478
(87) Internationale Veröffentlichungsnummer: WO 1999/035543

(56) Entgegenhaltungen:
- EP-A- 0 590 175
- WO-A-95/15518
- DE-A- 19 529 434
- DE-C- 19 504 404
- GB-A- 2 186 716

## Beschreibung

Die vorliegende Erfindung betrifft eine elektronische, digitale Einrichtung wie in der DE 19529434 beschrieben.

Komplexe und insbesondere sicherheitsrelevante Funktionen von Fahrzeugen werden in zunehmendem Maße von elektronischen, digitalen Einrichtungen gesteuert bzw. geregelt. Solche Steuerungen bzw. Regelungen beziehen sich z.B. auf den Motor eines Fahrzeugs selbst, auf dessen Bremsanlage, sein Getriebe, das Fahrwerk, usw. Die fehlerfreie Funktion solcher Steuerungs- bzw. Regelungseinrichtungen ist zum einen wichtig, um modernen Erfordernissen wie Umweltfreundlichkeit, Lärmreduktion und zum anderen auch den einzuhaltenden Sicherheitserfordernissen gerecht zu werden.

Die genannten elektronischen, digitalen Einrichtungen weisen in der Regel ein Rechenwerk (CPU) auf, einen Schreib-/Lese-Speicher (RAM), einen Festwertspeicher (ROM), in neuerer Zeit einen Flash-Speicher (FLS) und Schnittstellenbausteine (ITF). Diese Komponenten dienen der internen Arbeitsweise der elektronischen, digitalen Einrichtung sowie ihrer Kommunikation mit der Sensorik und der Aktorik.

Wenn die elektronische, digitale Einrichtung sicherheitsrelevante Bereiche betrifft, beispielsweise Bremsanlage, Motor oder Fahrgestellt, muß sichergestellt sein, daß Fehlfunktionen vermieden werden bzw. erkannt und mit Failsafe-Strategien verknüpft werden.

Eine Strategie zur Absicherung der elektronischen Einrichtung war es bisher, die elektronische Einrichtung redundant vorzusehen. Dies bedeutet, daß die gesamte Steuerungs- bzw. Regelungseinrichtung doppelt vorhanden ist. Die doppelt vorhandenen Einrichtungen arbeiteten nach denselben Programmen und Algorithmen und nach Maßgabe der gleichen Eingangsgrößen, arbeiteten jedoch prinzipiell unabhängig voneinander. Über zusätzlich Kanäle und veranlaßt durch eigens vorgesehene Programmschritte wurden von Zeit zu Zeit Daten, insbesondere Ergebnis- bzw. Zwischenergebnisdaten, ausgetauscht, um zu überprüfen, ob die redundanten Steuerungen bzw. Regelungen zu den gleichen Ergebnissen kamen. Wenn die gleichen Ergebnisse vorlagen, wurde davon ausgegangen, daß diese Ergebnisse richtig sind. Ansonsten wurde ein Fehlersignal ausgegeben. Diese vollständige Redundanz löst zwar das Problem der Fehlersicherheit zu einem gewissen Grad auf, sie hat aber den Nachteil, daß sie außerordentlich teuer ist, da dieselbe Steuerung bzw. Regelung zweimal vorgesehen sein muß. Der Datenabgleich gestaltet sich umständlich, da dafür Sorge getragen werden muß, daß bei relativ getrennt arbeitenden Systemen nur tatsächlich einander entsprechende Daten miteinander verglichen werden.

Aus der DE 19529434, die einen Stand der Technik nach Art. 5412 EPÜ darstellt ist ein Mikroprozessorsystem für sicherheitskritische Regelungen bekannt. In diesem System sind ein Bus sowie ein Prozessor jeweils redundant vorgesehen. Die Datenspeicherung erfolgt nicht redundant. Zwar haben beide Teilsysteme jeweils einen Schreib-/Lese-Speicher und einen Festwertspeicher, es werden aber im einen System nur die tatsächlichen Daten gespeichert, während im anderen Teilsystem die zugehörigen Steuerungsdaten, beispielsweise Paritätsbits, gespeichert werden. Beim Zugriff beispielsweise auf den Festwertspeicher, der über die beiden Teilsysteme verteilt ist, werden durch spezialisierte Übertragungseinrichtungen die jeweils fehlenden Teile in das jeweils andere Teilsystem übertragen. So wird das Paritätsbit aus dem Paritäts-Festwertspeicher über eine spezialisierte Übertragungseinrichtung in das Teilsystem übertragen, an das der eigentliche Daten-Festwertspeicher angeschlossen ist. Anders herum werden die Daten aus dem Daten-Festwertspeicher über eine spezialisierte Übertragungseinrichtung in das Teilsystem übertragen, an das der Paritäts-Festwertspeicher angeschlosen. Somit werden durch je eine spezialisierte Übertragungseinrichtung die Daten auf den beiden redundanten Bussen ergänzt und können dann in gleicher Weise verwendet werden. Wenn die Daten einer weiteren nicht redundanten Komponente vom einen auf das andere Teilsystem zu übertragen sind, muß eine weitere Übertragungseinrichtung vorgesehen werden, die nicht nur die Daten- bzw. Prüfsignale überträgt, sondern alle auf einem Bus anliegenden Daten. Dadurch ergibt sich ein komplizierter Aufbau hinsichtlich des Datenab-gleichs zwischen den beiden teilredundanten Systemen. Außerdem ergibt sich der Nachteil, daß die gespeicherten Daten selbst nicht redundant sind.

Aufgabe der Erfindung ist es, eine elektronische, digitale Einrichtung zur Steuerung bzw. Regelung von Vorgängen für ein Fahrzeug anzugeben, die eine sichere Fehlererkennung erlaubt und die kostengünstiger und einfacher herzustellen ist.

Diese Aufgabe wird mit den Merkmalen des unabhängigen Anspruchs 1 gelost. Abhängige Ansprüche sind auf bevorzugte Ausführungsformen der Erfindung gerichtet.

Bei der erfindungsgemäßen elektronischen, digitalen Einrichtung, nachfolgend auch "Steuerung" oder "Regelung" genannt, müssen nicht alle Komponenten redundant vorgesehen sein. Das Gesamtsystem kann teilredundant dergestalt aufgebaut sein, daß bestimmte Komponenten, insbesondere ein Rechenwerk und ein Speicher, redundant und andere nicht redundant aufgebaut sind. Dies führt aufgrund eines einfacheren Aufbaus zu Kostensenkung bei zumindest gleichem Sicherheitsstandard.

Bei einem System, das redundante Komponenten aufweist, kann auch eine als Hardware ausgebildete Überprüfungseinrichtung vorgesehen sein, die die in den redundanten Komponenten anliegenden Daten miteinander vergleicht und bei abweichenden Daten ein Fehlersignal ausgibt. Eine solche Überprüfungseinrichtung läßt sich auch bei den vorher beschriebenen, nur teilweise redundanten Steuerungen bzw. Regelungen einsetzen.

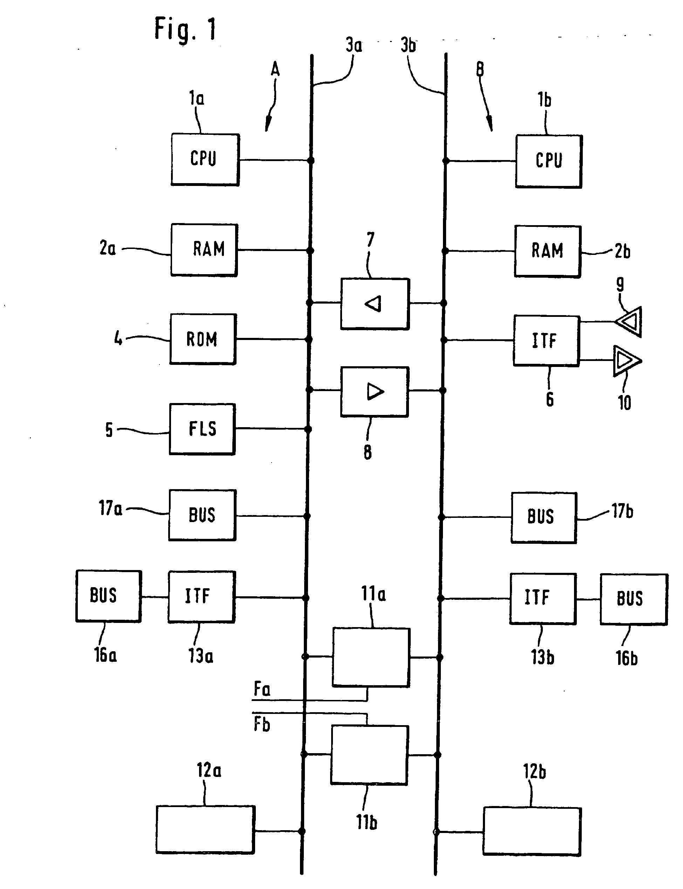

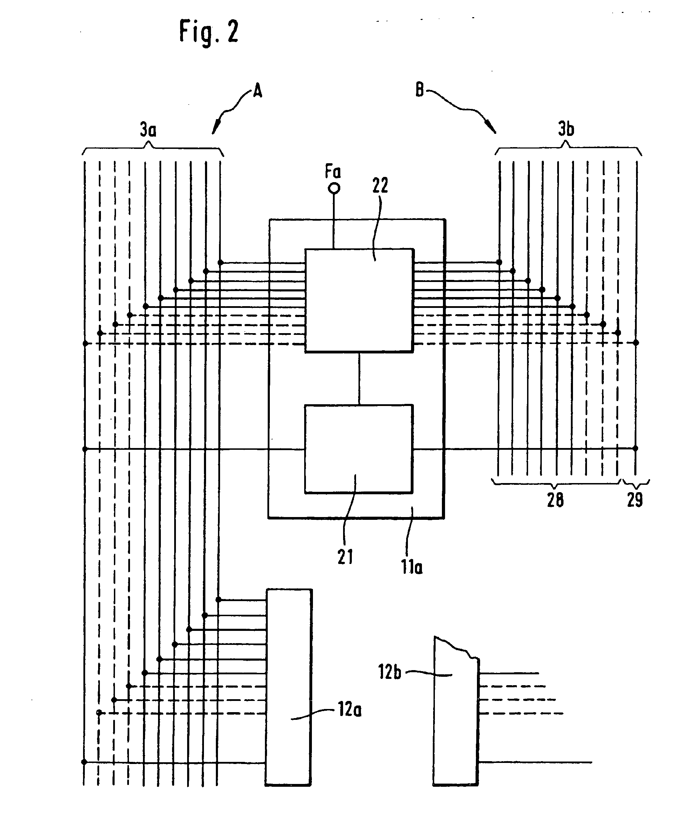

Bezugnehmend auf die Figuren 1 und 2 werden nachfolgend einzelne Ausführungsformen der Erfindung beschrieben. Es zeigen:
- Fig. 1: eine Darstellung einer teilredundanten elektronischen Einrichtung, und
- Fig. 2: eine genauere Darstellung der Überprüfungseinrichtung.

Bezugnehmend auf Fig. 1 werden nun in Kombination verschiedene erfindungsgemäße Ausführungsformen beschrieben.

In Fig. 1 bezeichnen die Bezugsziffern 1a, b ein Rechenwerk, auch CPU genannt, die Ziffern 2a, b einen Schreib-/Lese-Speicher, auch RAM genannt, die Bezugsziffern 3a, b einen Bus, das Bezugszeichen 4 einen Festwertspeicher, auch ROM genannt, das Bezugszeichen 5 einen Flash-Speicher, auch FLS genannt, die Bezugsziffern 7 und 8 Übertragungseinrichtungen, die zwischen die redundanten Busse 3a, b geschaltet sind, die Bezugszeichen 11a, b eine Überprüfungseinrichtung und die Bezugszeichen 12a, b eine Testeinrichtung. An die Busse 3a, 3b kann vorzugsweise redundant ein lokaler Peripheriebus 17a, 17b angeschlossen sein. Über geeignete Schnittstellen 13a, 13b kann ebenfalls vorzugsweise redundant außerdem ein lokaler Bus 16a, 16b an die Busse 3a, 3b angeschlossen sein, wobei die Schnittstelle 13a, 13b gegebenenfalls der Geschwindigkeitsanpassung zwischen den beiden Bussen dient.

Zumindest die CPU 1 und der Bus 3 sind redundant vorgesehen. CPU 1a ist mit Bus 3a verbunden und bilden ein Teilsystem A, CPU 1b mit Bus 3b und bilden Teilsystem B. Daneben ist auch das RAM 2 redundant dergestalt vorgesehen, daß ein RAM 2a mit dem Bus 3a und ein RAM 2b mit dem Bus 3b verbunden ist. Andere Komponenten müssen nicht-redundant vorgesehen sein. Zumindest ein Speicher, beispielsweise das ROM 4, ist nur einfach vorgesehen, in Fig. 1 ist es als mit dem Bus 3a verbunden dargestellt. Der Flash-Speicher 5 kann ebenfalls nicht redundant vorgesehen sein, auch er ist als mit dem Bus 3a verbunden gezeigt. Ein Flash-Speicher ist ein nichtflüchtiger Schreib-/Lese-Speicher. Daneben kann ein Schnittstellenbaustein 6 vorgesehen sein, der ebenfalls nicht reundant vorgesehen sein kann. In Fig. 1 ist er als mit dem Bus 3b verbunden gezeigt. Über den Schnittstellenbaustein 6 können von Sensoren 9 her Signale empfangen und an Aktoren 10 Signale ausgegeben werden.

Demnach kann zur Kostenminderung vorgesehen sein, einzelne Komponenten, beispielsweise ROM 4, nicht redundant vorzusehen. Vorzugsweise sind die nicht-redundanten Komponenten an einen der Busse angeschlossen.

Damit die redundant vorhandenen CPUs 1a, 1b auch diejenigen Daten empfangen bzw. weiterleiten können, die Komponenten betreffen, die nicht an "ihrem" Bus bzw. an dem Bus ihres Teilsystems angeschlossen sind, ist zwischen den Teilsystemen A und B und insbesondere zwischen den Bussen eine Übertragungseinrichtung 7, 8 vorgesehen, die die Daten einer nicht redundanten Komponente auf einem Bus auf den anderen Bus überträgt. Damit ist sichergestellt, daß die redundanten Komponenten die gleichen Daten sehen, bearbeiten und ausgeben können. Die Übertragungseinrichtung 7, 8 kann bidirektional ausgestaltet sein. Fig. 1 zeigt schematisch einen Fall, in dem zwei monodirektionale Übertragungseinrichtungen vorgesehen sind.

Aufgrund der Redundanz des Schreib-/Lese-Speichers RAM 2a, 2b vereinfacht sich die Struktur sowie der Betrieb der Übertragungseinrichtung 7, 8 deutlich. Es muß nicht mehr der Fall unterschieden werden, ob nur ein Teil der Bussignale übertragen wird (im Stand der Technik immer dann, wenn auf RAM oder ROM zugegriffen wurde). Vielmehr können ohne Rücksicht auf Zugriffsadressen oder ähnliches innerhalb eines der teilredundanten Systeme Daten fortlaufend vom einen auf das andere teilredundante System übertragen werden. Da sich deshalb die Datenübertragung zwischen den teilredundanten Systemen vereinfacht, ist es leichter, den Vergleich der Ergebnisse der beiden teilredundanten Systeme kontinuierlich vorzunehmen. Bei einem kontinuierlichen vergleich (anstatt nur sporadisch) werden aber Fehlfunktionen früher erkannt und damit die Sicherheit des Systems erhöht.

Eine Übertragungseinrichtung 7, 8 kann jeweils von der Ziel-CPU gesteuert sein. Übertragen werden nicht nur Daten, sondern alle Signale, die von den jeweils angesprochenen Einheiten ausgehen.

Vorzugsweise ist die Übertragungseinrichtung 7, 8 so ausgestaltet, daß eine Komponente an einem Bus gegebenenfalls gar nicht merkt, daß sie auf eine Komponente an einem anderen Bus zugreift. Damit ist insbesondere der Synchronlauf der beiden Systeme sichergestellt. Wenn beispielsweise CPU 1a von ROM 4 Daten abfragt, wird aufgrund der Tatsache, daß CPU 1b nach dem gleichen Programm arbeitet, auch diese CPU Daten vom ROM 4 abfragen. Sie erhält diese Daten dann über die Übertragungseinrichtung 8. In ähnlicher Weise kann beispielsweise die CPU 1a über die Übertragunseinrichtung 7 Daten vom Schnittstellenbaustein 6 empfangen.

Durch die Kombination eines teilredundanten Systems mit einer Übertragungseinrichtung 7, 8 zwischen den Teilsystemen und insbesondere deren Bussen, können die Kosten bzw. der Aufwand für die Absicherung verringert werden. Auch der Platzbedarf verringert sich. Es wird dadurch möglich, den gesamten Aufbau auf einem einzigen Chip zu integrieren. Dies erleichtert den Synchronlauf zwischen den beiden Systemen, da in einfacherer Weise ein gemeinsames Taktsignal verwendet werden kann.

Die parallel arbeitenden Teilsysteme arbeiten dabei vorzugsweise nach den gleichen Programmen. Sie können auch nach dem gleichen Taktsignal arbeiten. Außerdem empfangen sie die gleichen Eingangssignale und liefern - sofern sie störungsfrei arbeiten - auch die gleichen Ausgangssignale.

Die elektronische, digitale Einrichtung kann eine Überprüfungseinrichtung 11 aufweisen, mit der überprüft wird, ob die beiden parallel arbeitenden Systeme die gleichen Ergebnisse liefern. Die Überprüfungseinrichtung 11 ist vorzugsweise als Hardwareeinrichtung aufgebaut. Das bedeutet, daß softwareseitig weniger bzw. keine Vorkehrungen für den Datenabgleich zwischen den redundanten Teilsystemen zu treffen sind. Die Überprüfungseinrichtung 11 ist vorzugsweise zwischen die redundanten Busse 3a, b geschaltet und überprüft den Datenverkehr auf diesen Bussen auf Gleichheit. Vorzugsweise wird die Überprüfung nur dann durchgeführt bzw. nur dann als gültig angesehen, wenn die auf den Bussen anliegenden Daten gültig sind. Damit wird sichergestellt, daß nicht ungültige Daten bzw. Übergangszustände am Bus miteinander verglichen werden und zu nicht gerechtfertigten Fehlermeldungen führen.

Indem die Überprüfungseinrichtung 11 als zwischen den Bussen liegende Hardwareeinrichtung vorgesehen ist, wird das fortlaufende Überprüfen der Daten auf dem Bus möglich. Dadurch wird die Überprüfungsqualität erhöht, da Fehler bei ihrem ersten Auftreten festgestellt werden können. Die Gestaltung der Software für die CPUs 1a, b vereinfacht sich, da keine Vorkehrungen zum Datenabgleich getroffen werden müssen.

Die oben erwähnte Überprüfungseinrichtung 11 eignet sich insbesondere für die oben erwähnten teilredundant bzw. auf einem einzigen Chip vorgesehenen Steuerungen bzw. Regelungen, da bei ihnen der Synchronlauf zwischen den Teilsystemen auf einfache Weise gewährleistet werden kann. Die auf die synchron laufenden Signale auf den redundanten Bussen 3a, b "schauende" Überprüfungseinrichtung 11 kann dann in einfacher Weise durch beispielsweise einen bitweisen Vergleich der Daten die Richtigkeit der Daten sicherstellen.

Die Überprüfungseinrichtung 11 kann ihrerseits redundant ausgelegt sein. Es können zwei vorzugsweise in ihrem inneren Aufbau gleiche Überprüfungseinrichtungen 11a, b vorgesehen sein, die die jeweiligen Überprüfungen parallel vornehmen und gegebenenfalls getrennt Fehlersignale Fa, Fb liefern. Diese Signale können ihrerseits verglichen werden und bei Ungleichheit zu einem weiteren Fehlersignal verarbeitet werden.

Fig. 2 zeigt eine Überprüfungseinrichtung 11a in genauerer Darstellung. Sie liegt zwischen den Bussen 3a und 3b. Diese Busse selbst weisen einerseits jeweils Datenleitungen 28 und Steuerungsleitungen 29 auf, für Bus 3b ist dies gezeigt, im Bus 3a verhält es sich genauso. Die Überprüfungseinrichtung 11a weist dabei eine Vergleichseinrichtung 22 auf, die jeweils die einzelnen Datenleitungen und ggf. auch Steuerungsleitungen der Busse 3a, 3b empfängt und diese beispielsweise einem bitweisen Vergleich unterwirft. Einander entsprechende Bits werden dabei miteinander verglichen, z.B. in einem EXOR-Gatter, und nur bei Gleichheit aller einander entsprechender Signale der Busse 3a und 3b wird kein Fehlersignal Fa ausgegeben. Weicht der Wert auf einer Signalleitung des einen Busses von einem Wert auf einer entsprechenden Signalleitung des anderen Busses ab, erfolgt die Ausgabe eines Fehlersignals Fa.

Um sicherzustellen, daß nur Daten miteinander verglichen werden, die "gültig" sind und die nicht zufällig auf dem Bus liegen, kann eine Auswerteeinrichtung 21 vorgesehen sein. Allgemein ausgedrückt kann die Auswerteeinrichtung 21 so ausgelegt sein, daß sie das Übertragungsprotokoll eines Busses decodiert und nach Maßgabe dieser Decodierung einen Vergleich der Signale auf den Bussen 3a und 3b zuläßt, insbesondere kann sie mit den Steuerleitungen 29 eines Busses oder beider Busse verbunden sein. Anhand der auf den Steuerleitungen 29 anliegenden Signale ermittelt die Auswerteeinrichtung 21 den Zeitpunkt, zu dem die auf dem Bus anliegenden Daten gültig sind. Erst dann wird der Vergleich durchgeführt bzw. das Vergleichsergebnis als gültig zugelassen. Vorher wird die Ausgabe einer Fehlermeldung unterbunden.

Wenn in einer bevorzugten Ausführungsform zwei Überprüfungseinrichtungen 11a, b vorgesehen sind, können diese in ihrem inneren Aufbau identisch aufgebaut sein. Wenn sie entsprechend Fig. 2 aufgebaut sind, können die jeweiligen Auswerteeinrichtungen 21 jedoch so verschaltet sein, daß die Auswerteeinrichtung 21 der einen Überprüfungseinrichtung 11a auf die Steuerungsleitungen 29 des einen Busses 3a "schaut" bzw. mit diesem verbunden ist, um die Gültigkeit der Daten auf diesem Bus 3a festzustellen, während die Auswerteeinrichtung 21 der anderen Überprüfungseinrichtung 11b mit den Steuerungsleitungen 29 des anderen Busses 3b verbunden ist. Auf diese weise kann mittelbar ein Vergleich der Signale auf den Steuerungsleitungen 29 der Busse 3a bzw. 3b erfolgen. Diese Signale müssen dann nicht zwangsläufig der Vergleichseinrichtung 22 zugeführt werden, so daß diese weniger aufwendig gestaltet werden kann.

Vorzugsweise werden alle Datenleitungen 28 der Busse 3a und 3b miteinander verglichen. Es kann aber auch vorgesehen sein, einer Vergleichseinrichtung 22 nur einen Teil der Leitungen und insbesondere der Datenleitungen 28 der Busse 3a, 3b zuzuführen. Wenn die Überprüfungseinrichtung 11a, b doppelt vorhanden ist (wie in Fig. 1 gezeigt), kann die eine Überprüfungseinrichtung 11a einen ersten Teil der Datenleitungen miteinander vergleichen und die andere Überprüfungseinrichtung 11b den anderen Teil. Auch dadurch verringert sich der Aufwand, da die Vergleichseinrichtungen 22 kleiner ausgelegt werden können.

Fig. 2 zeigt schematisch nochmals die bereits kurz angesprochene Testeinrichtung 12a, 12b. Es handelt sich um eine Einrichtung zur Hervorrufung der Situation, daß die beiden Busse 3a und 3b unterschiedliche Signale zeigen. Dies entspricht einem Fehlersignal. Die Testeinrichtung 12a, 12b simuliert also einen Fehler. Mit der Testeinrichtung 12a, 12b wird die Funktion der Überprüfungseinrichtung 11a, b getestet. Wenn die Testeinrichtung 12a, b einen Fehler simuliert, muß die Überprüfungseinrichtung 11a, b einen Fehler anzeigen. Tut sie es nicht, ist sie fehlerhaft und es wird ebenfalls ein Fehler ausgegeben.

Bei der Testeinrichtung 12a, b kann es sich um zwei Register handeln, von denen je eines mit je einem Bus verbunden ist. Die Register sind so aufgebaut, daß sie auf unterschiedliche Schreibadressen, jedoch auf gleiche Leseadressen ansprechen. Dadurch können die in ihren Adressen "unsymmetrischen" Register durch ein "symmetrisches" (= identisches) Programm in den beiden Teilsystemen A und B "unsymmetrisch", also mit unterschiedlichen Daten, beschrieben werden. Die Test-Task hätte dann einen ersten Schreibschritt, mit dem das Register 12a des Teilsystems A beschrieben wird (der Schreibschritt wird im Teilsystem B symmetrisch ausgeführt, führt aber hier ins Leere, weil die entsprechende Schreibadresse nicht existiert). In einem zweiten Schreibschritt wird die (andere) Schreibadresse des Registers 12b im Teilsystem B angesprochen, dann werden auch andere Daten als im vorherigen Schreibschritt in das Register 12b geschrieben (der symmetrische Schreibschritt im Teilsystem A führt ins Leere, weil die geänderte Schreibadresse im Teilsystem A nicht existiert). Dadurch sind die Register nach dem Ablauf der beiden Schreibschritte durch unterschiedliche Daten belegt. In einem anschließenden Leseschritt, der mit der für beide Register gleichen Leseadresse ausgeführt wird, werden die Daten in den Registern gelesen. Da diese Register unterschiedliche Inhalte haben, treten auf den Bussen 3a und 3b unterschiedliche Daten auf, so daß die Überprüfungseinrichtung 11a, b einen Fehler anzeigen muß. Tut sie es nicht, ist die Überprüfungseinrichtung 11a, b ihrerseits fehlerhaft und es wird abermals ein Fehlersignal ausgegeben. Diese Ausgabe kann durch die CPU 1a, b erfolgen.

Die zueinander unterschiedlichen Schreibadressen und zueinander gleichen Leseadressen der Register 12a und 12b sind vorzugsweise durch Hardware implementiert.

Durch eine wie oben beschrieben aufgebaute elektronische Einrichtung wird eine in ihrem Aufbau einfache Steuerung bzw. Regelung beschrieben. Durch die fortwährende Überwachung der Signale auf dem Bus werden Fehlfunktionen augenblicklich erfaßt.

## Patentansprüche

1. Elektronische, digitale Einrichtung zur Steuerung und/oder Regelung von Vorgängen für ein Fahrzeug, mit mehreren Komponenten (1 bis 6), von denen zumindest ein Rechenwerk (1a, b) ein oder mehrere Speicher (2) und ein die Komponenten verbindender Bus (3a, b) jeweils redundant und weitere Komponenten nicht-redundant vorgesehen sind, wobei die nicht - redundante Komponente (4, 5, 6) mit einem der redundanten Busse (3a, b) verbunden ist und eine Übertragungseinrichtung (7, 8) vorgesehen ist, die den Datenaustausch dieser nicht-redundanten Komponente (4, 5, 6) auf dem einen redundanten Bus auf den anderen redundanten Bus überträgt.

2. Elektronische digitale Einrichtung nach Anspruch 1, **dadurch gekennzeichnet, daß** der Schreib-/Lese-Speicher (2a, b) redundant vorgesehen ist.

3. Elektronische digitale Einrichtung nach Anspruch 1 oder 2, **dadurch gekennzeichnet, daß** ein Festwertspeicher (4) und/oder ein Flash-Speicher (5) und/oder ein Schnittstellenbaustein (6) nicht redundant vorgesehen sind.

4. Elektronische digitale Einrichtung nach Anspruch 1, **dadurch gekennzeichnet, daß** die Ubertragungseinrichtung (7, 8) zwei Komponenten aufweist, die jeweils zwischen die beiden Busse geschaltet sind, deren eine vom einen Bus auf den anderen Bus und deren andere in umgekehrter Richtung Daten übertragen.

5. Elektronische digitale Einrichtung nach Anspruch 4, **dadurch gekennzeichnet, daß** die Übertragungseinrichtung (7, 8) jeweils nur die Datensignale vom einen Bus auf den anderen Bus überträgt, die Steuerungssignale aber nicht überträgt.

6. Elektronische digitale Einrichtung nach einem der Ansprüche 1 bis 5, zur Steuerung und/oder Regelung von Vorgängen für ein Fahrzeug, mit mehreren Komponenten (1 bis 6), von denen zumindest ein Rechenwerk (1a, b) und ein die Komponenten verbindender Bus (3a, b) jeweils redundant vorgesehen sind, **gekennzeichnet durch** eine vorzugsweise redundant ausgebildete Überprüfungseinrichtung (11a, b), die Daten, die in den redundanten Systemen entstehen, miteinander vergleicht und bei abweichenden Daten ein Fehlersignal (Fa, Fb) ausgibt.

7. Elektronische digitale Einrichtung nach Anspruch 6, **dadurch gekennzeichnet, daß** die Überprüfungseinrichtung (11a, b) eine durch Hardware implementierte Vergleichseinrichtung (22) aufweist, die mit Datenleitungen (28) der beiden zueinander redundanten Busse (3a, b) verbunden ist und die Daten auf den Bussen (3a, b) miteinander vergleicht.

8. Elektronische digitale Einrichtung nach Anspruch 7, **dadurch gekennzeichnet, daß** die Vergleichseinrichtung (22) die Daten auf den zueinander redundanten Bussen (3a, b) dann miteinander vergleicht, wenn die Daten auf den Bussen gültig sind.

9. Elektronische digitale Einrichtung nach Anspruch 8, **dadurch gekennzeichnet, daß** die Überprüfungseinrichtung (11a, b) eine Auswerteeinrichtung (21) aufweist, die mit Steuerleitungen (29) eines Busses (3a, b) verbunden ist, um die Gültigkeit von Daten auf dem Bus (3a, b) zu bestimmen.

10. Elektronische digitale Einrichtung nach einem der Ansprüche 7 bis 9, **gekennzeichnet durch** eine Testeinrichtung (12a, b) zum Testen der Funktion der Uberprüfungseinrichtung (11a, b).

11. Elektronische digitale Einrichtung nach Anspruch 10, **dadurch gekennzeichnet, daß** die Testeinrichtung zwei Register (12a, b) aufweist, von denen je eines mit je einem der zueinander redundanten Busse (3a, b) verbunden ist.

12. Elektronische digitale Einrichtung nach Anspruch 11, **dadurch gekennzeichnet, daß** die zwei Register (12a, b) zueinander unterschiedliche Schreibadressen und zueinander gleiche Leseadressen haben.

13. Elektronische digitale Einrichtung nach einem der Ansprüche 1 bis 12, **dadurch gekennzeichnet, daß** sie auf einem einzigen Chip implementiert ist.

14. Elektronische digitale Einrichtung nach einem der Ansprüche 1 bis 13, **dadurch gekennzeichnet, daß** die redundanten Rechenwerke (1a, b) synchron zueinander arbeiten. Elektronische digitale Einrichtung nach einem der

15. Ansprüche 1 bis 14, **dadurch gekennzeichnet, daß** sie die Bremsanlage und/oder das Fahrwerk des Fahrzeugs steuert und/der regelt.

16. Elektronische digitale Einrichtung nach einem der Ansprüche 1 bis 15, **dadurch gekennzeichnet, daß** die redundanten Rechenwerke (1a, b) identische Programme ausführen.

## Claims

1. An electronic digital device for controlling and/or adjusting processes for a vehicle, such device consisting of several components (1 to 6), of which at least one arithmetic unit (1a, b), one or more memories (2), and a bus (3a, b) connecting the components are redundant and other components are not redundant, with the non-redundant component (4, 5, 6) being connected to one of the redundant busses (3a, b) and a transmission device (7, 8) being provided, which transfers the data exchange of this non-redundant component (4, 5, 5) on the one redundant bus to the other redundant bus.

2. An electronic digital device according to Claim 1, **characterized in that** the read-write memory (2a, b) is redundant.

3. An electronic digital device according to Claim 1 or 2, **characterized in that** a read-only memory (4) and/or a flash memory (5) and/or an interface module (6) are not redundant.

4. An electronic digital device according to Claim 1, **characterized in that** the transmission device (7, 8) includes two components, which are connected between the two busses respectively, and wherein one of the components transmits data from one bus to the other and the other component transmits data in the opposite direction.

5. An electronic digital device according to Claim 4, **characterized in that** the transmission device (7, 8) transmits only the data signals from one bus to the other bus, but does not transmit the control signals.

6. An electronic digital device according to one of the Claims 1 to 5, for controlling or adjusting processes for a vehicle, comprising several components (1 to 6), of which at least one arithmetic unit (1a, b) and a bus (3a, b) connecting the components are redundant, **characterized in that** there is a preferably redundant monitoring device (11a, b) that compares the data produced in the redundant systems and emits an error signal (Fa, Fb) when the data deviate from one another.

7. An electronic digital device according to Claim 6, **characterized in that** the monitoring device (11a, b) includes a comparator (22) implemented by means of hardware, which is connected to data lines (28) of the two redundant busses (3a, b) and compares the data on the busses (3a, b) with one another.

8. An electronic digital device according to Claim 7, **characterized in that** the comparator (22) compares the data on the redundant busses (3a, b) with one another when the data on the busses are valid.

9. An electronic digital device according to Claim 8, **characterized in that** the monitoring device (11a, b) includes an evaluation device (21) that is connected to the control lines (29) of a bus (3a, b) in order to determine the validity of the data on the bus (3a, b).

10. An electronic digital device according to one of the Claims 7 to 9, **characterized by** a testing device (12a, b) for testing the performance of the monitoring device (11a, b).

11. An electronic digital device according to Claim 10, **characterized in that** the testing device includes two registers (12a, b), each of which is connected to one of the redundant busses (3a, b), respectively.

12. An electronic digital device according to Claim 11, **characterized in that** the two registers (12a, b) have different write addresses and the same read addresses.

13. An electronic digital device according to one of the Claims 1 to 12, **characterized in that** it is implemented on one single chip.

14. An electronic digital device according to one of the Claims 1 to 13, **characterized in that** the redundant arithmetic units (1a, b) work synchronously.

15. An electronic digital device according to one of the Claims 1 to 14, **characterized in that** it controls and/or regulates the brake system and/or the chassis of the vehicle.

16. An electronic digital device according to one of the Claims 1 to 15, **characterized in that** the redundant arithmetic units (1a, b) execute identical programs.

## Revendications

1. Dispositif numérique électronique pour la commande et/ou la régulation de processus pour un véhicule, comportant plusieurs composants (1 à 6) dont au moins une unité de calcul (1a, b), une ou plusieurs mémoires (2) et un bus (3a, b) reliant les composants sont prévus chacun redondants et des composants complémentaires sont prévus non redondants, le composant non redondant (4, 5, 6) étant relié à l'un des bus redondants (3a, b) et un dispositif de transmission (7, 8) étant prévu qui transmet l'échange de données de ce composant non redondant (4, 5, 6) d'un bus redondant à l'autre bus non redondant.

2. Dispositif numérique électronique selon la revendication 1, **caractérisé en ce que** la mémoire vive (2a, b) est prévue redondante.

3. Dispositif numérique électronique selon la revendication 1 ou 2, **caractérisé en ce que** sont prévus non redondants une mémoire morte (4) et/ou une mémoire flash (5) et/ou un composant d'interface (6).

4. Dispositif numérique électronique selon la revendication 1, **caractérisé en ce que** le dispositif de transmission (7, 8) comporte deux composants qui sont couplés chacun entre les deux bus, dont un transmet des données d'un bus à l'autre bus et l'autre dans le sens inverse.

5. Dispositif numérique électronique selon la revendication 4, **caractérisé en ce que** le dispositif de transmission (7, 8) transmet toujours uniquement les signaux de données d'un bus à l'autre bus mais ne transmet pas les signaux de commande.

6. Dispositif numérique électronique selon l'une des revendications 1 à 5, pour la commande et/ou la régulation de processus pour un véhicule, comportant plusieurs composants (1 à 6) dont au moins une unité de calcul (1a, b) et un bus (3a, b) reliant les composants sont prévus chacun redondants, **caractérisé par** un dispositif de vérification (11a, b) réalisé de préférence redondant qui compare entre elles les données qui se forment dans les systèmes redondants, et délivre un signal de défaut (Fa, Fb) en cas de données divergentes.

7. Dispositif numérique électronique selon la revendication 6, **caractérisé en ce que** le dispositif de vérification (11a, b) comporte un dispositif de comparaison (22) mis en oeuvre de manière matérielle, qui est relié à des lignes de données (28) des deux bus (3a, b) redondants l'un par rapport à l'autre et compare entre elles les données sur les bus (3a, b).

8. Dispositif numérique électronique selon la revendication 7, **caractérisé en ce que** le dispositif de comparaison (22) compare entre elles les données sur les bus (3a, b) redondants l'un par rapport à l'autre, lorsque les données sont valides sur les bus.

9. Dispositif numérique électronique selon la revendication 8, **caractérisé en ce que** le dispositif de vérification (a, b) comporte un dispositif d'évaluation (21) qui est relié à des lignes de commande (29) d'un bus (3a, b), afin de déterminer la validité de données sur le bus (3a, b).

10. Dispositif numérique électronique selon l'une des revendications 7 à 9, **caractérisé par** un dispositif de test (12a, b) pour tester le fonctionnement du dispositif de vérification (11a, b).

11. Dispositif numérique électronique selon la revendication 10, **caractérisé en ce que** le dispositif de test comporte deux registres (12a, b) dont un est relié à l'un des bus (3a, b) redondants l'un par rapport à l'autre.

12. Dispositif numérique électronique selon la revendication 11, **caractérisé en ce que** les deux registres (12a, b) ont des adresses d'écriture différentes l'une de l'autre et des adresses de lecture identiques.

13. Dispositif numérique électronique selon l'une des revendications 1 à 12, **caractérisé en ce qu'**il est installé sur une seule puce.

14. Dispositif numérique électronique selon l'une des revendications 1 à 13, **caractérisé en ce que** les unités de calcul (1a, b) redondantes fonctionnent de manière synchrone.

15. Dispositif numérique électronique selon l'une des revendications 1 à 14, **caractérisé en ce qu'**il commande et/ou régule le système de freinage et/ou le châssis du véhicule.

16. Dispositif numérique électronique selon l'une des revendications 1 à 15, **caractérisé en ce que** les unités de calcul (1a, b) redondantes exécutent des programmes identiques.
